# EUROPÄISCHE PATENTSCHRIFT

(11) **EP 1 871 839 B1**
(45) Veröffentlichungstag und Bekanntmachung des Hinweises auf die Patenterteilung: **28.08.2013**
(21) Anmeldenummer: 06753393.5
(22) Anmeldetag: 18.04.2006
(51) Int. Cl.: C08L 89/06

(54) **AUTOSTERILE, ANTISEPTISCHE KOLLAGENZUBEREITUNGEN, IHRE VERWENDUNG UND VERFAHREN ZU IHRER HERSTELLLUNG**
SELF-STERILIZED, ANTISEPTIC COLLAGEN PREPARATIONS, THEIR USE AND METHOD FOR PRODUCING THEM
PREPARATIONS DE COLLAGENE ANTISEPTIQUES A AUTOSTERILISATION, LEUR UTILISATION ET PROCEDE POUR LEUR PRODUCTION

(30) Priorität: 18.04.2005 DE 102005017845
(43) Veröffentlichungstag der Anmeldung: 02.01.2008
(73) Patentinhaber: Lohmann & Rauscher GmbH & Co. KG, 56567 Neuwied (DE)
(72) Erfinder: ALUPEI, Iulian, Corneliu, 56564 Neuwied (DE); GORKA, Marius-Thomas, 56070 Koblenz (DE); RUTH, Peter, 56581 Melsbach (DE); ROHRER, Christian, A-4020 Linz (AT); LEUPRECHT, Helmut, A-1130 Wien (AT)
(74) Vertreter: Flaccus, Rolf-Dieter
(86) Internationale Anmeldenummer: PCT/EP2006/003520
(87) Internationale Veröffentlichungsnummer: WO 2006/111347

(56) Entgegenhaltungen:
- EP-A- 0 048 558
- EP-A- 0 140 596
- EP-A- 1 593 399
- WO-A-90/06138
- WO-A-99/52946
- GB-A- 2 280 850
- DATABASE WPI Section Ch, Week 199629 Derwent Publications Ltd., London, GB; Class C07, AN 1996-283363 XP002397635 & JP 08 119805 A (NAKAMURA K) 14. Mai 1996 (1996-05-14)
- DATABASE WPI Section Ch, Week 200009 Derwent Publications Ltd., London, GB; Class A96, AN 2000-104180 XP002397636 & RU 2 118 176 C1 (ISTRANOV L P) 27. August 1998 (1998-08-27)

## Beschreibung

Die vorliegende Erfindung betrifft die Herstellung autosteriler, antiseptischer Kollagenzubereitungen, ihre Verwendung zur Herstellung von autosterilen, antiseptischen Kollagenprodukten wie beispielsweise Schwämme, Folien oder Gelen, insbesondere für medizinische und/oder kosmetische Zwecke, sowie ein Verfahren zur Herstellung von Kollagenschwämmen.

Kollagen ist der wichtigste Faserbestandteil der Haut, von Knochen, Sehnen, Knorpel und Blutgefäßen. Kollagen ist ein Strukturprotein und zeichnet sich durch eine außergewöhnliche Aminosäurezusammensetzung aus. So beträgt der Anteil der Glycinreste der Polypeptidkette nahezu ein Drittel, der Anteil an Prolin ist höher als bei den meisten Proteinen und Kollagen zeichnet sich durch das Vorhandensein der Aminosäuren 4-Hydroxyprolin und 5-Hydroxylysin aus, die in nur sehr wenigen anderen Proteinen enthalten sind. In seiner nativen Form liegt Kollagen als dreisträngige Helix (Tripelhelix) vor, wobei es durch die Bildung von Quervernetzungen innerhalb der und zwischen den Kollagen bildenden Tropokollagenmolekülen stabilisiert wird.

Kollagen ist ein biologisch abbaubares wie auch biokompatibles Protein, das als Ausgangsmaterial für vielfältige Anwendungen in der Lebensmittelindustrie, in der pharmazeutischen und kosmetischen Industrie, sowie in der Medizin verwendet wird. Es sind zahlreiche Kollagenprodukte bekannt, beispielsweise Schwämme, Wundauflagen,

Fasern, Folien, Membrane oder Gele, die auch in der Medizin Verwendung finden.

EP 0 901 795 beschreibt beispielsweise Kollagenschwämme, die einen festen Hydrogenphosphat/Dihydrogenphosphat-Puffer aufweisen, und deren Verwendung als Wundauflage. Mit dieser ein schwaches, wasserlösliches saures Puffersystem aufweisenden Wundauflage soll der pH-Wert der Wundoberfläche im sauren Bereich bei pH-Werten zwischen 3,5 und 6,5 gehalten werden.

EP 0 562 862 beschreibt bioabsorbierbare Schwamm-Materialien als Wundimplantate. Diese Schwamm-Materialien umfassen eine Kollagenmatrix, die ausgerichtete Unterstrukturen aufweist. Die Matrix und/oder Unterstrukturen können oxidierte regenerierte Cellulose umfassen.

GB 2 280 850 beschreibt mit einem Wirkstoff versehene Implantate zur Behandlung von Peridontalerkrankungen, wobei die Implantate eine Kollagenfolie umfassen, die mit einer Schicht aus einem biologisch abbaubaren Polymer verstärkt ist, bei dem es sich um oxidierte regenerierte Cellulose handeln kann. Die Kollagenmatrix kann auch in ihr dispergierte Fasern oder Fragmente oxidierter regenerierter Cellulose enthalten.

GB 1 515 963 offenbart ein Material auf Basis von mit Mukopolysacchariden vernetztem Kollagen für chirurgische und andere medizinische Anwendungen, für Blutgefäß-Transplantate und andere Arten von Endoprothesen. Das Material enthält mindestens 5 Gew.-% eines Mukopolysaccharids, das irreversibel an Kollagen gebunden ist. Bei den Mukopolysacchariden handelt es sich um tierische Polysaccharide, die Hexosaminreste wie Hyaluronsäure, Chondroitinsulfat oder Heparinsulfat enthalten.

US 4,614,794 beschreibt Komplexe, die zwischen Kollagen und polyanionischen Polysacchariden aus Pflanzen, beispielsweise Natriumalginat, gebildet werden. Diese Komplexe werden vorzugsweise bei einem pH-Wert erhalten, der nicht höher als der isoelektrische Punkt des Proteins ist. Die Komplexe sollen für eine Vielzahl von medizinischen und chirurgischen Anwendungen geeignet sein.

Die kommerziell erhältlichen Kollagenprodukte werden üblicherweise aus Kollagen hergestellt, das aus dem Bindegewebe, der Haut, den Knochen oder den Sehnen von Säugetieren gewonnen wurde, beispielsweise von Rindern, Pferden oder Schweinen. Alternativ dazu kann Kollagen auch aus marinen Schwämmen isoliert werden, insbesondere aus Schwämmen der Gattung *Chondrosia reniformis* (Porifera, Demospongiae). Verfahren zur Isolierung von Kollagen aus marinen Schwämmen werden beispielsweise in WO 01/64046 und DE 10 2005 008 416 offenbart.

Es ist bekannt, dass Produkte auf Basis von Kollagen, insbesondere Kollagenprodukte für Anwendungen im medizinischen Bereich, während ihrer Herstellung sterilisiert werden müssen. Gebräuchliche Verfahren zur Sterilisation von Kollagenprodukten sind ihre Bestrahlung mit Gamma- und/oder Beta-Strahlen, oder ihre Begasung mit Ethylenoxid.

Die Nachteile der bekannten Sterilisationsverfahren für Kollagenprodukte bestehen darin, dass die Bestrahlung mit Gamma- und/oder Beta-Strahlen die tripelhelikale Konformation des Kollagens in den Kollagenprodukten zerstört und dadurch die Wirksamkeit des Kollagens, respektive des Produkts beeinträchtigt. Bei Ethylenoxid handelt es sich um eine toxische Substanz, von der Spuren in dem begasten Kollagenprodukt zurückbleiben können. Darüber hinaus sind die vorgenannten Sterilisationsverfahren kostenträchtig und zeitintensiv.

Der vorliegenden Erfindung lag daher die Aufgabe zugrunde, ein Verfahren zur Herstellung einer autosterilen, antiseptischen Kollagenzubereitung bereitzustellen, mit dem die vorgenannten Nachteile der gebräuchlichen Sterilisationsverfahren vermieden werden können. Autosteril bedeutet in diesem Zusammenhang, dass sich nach der Sterilisation hinzutretende Mikroorganismen (Bakterien, Hefen, Schimmelpilze und dergleichen) nicht vermehren können, sondern wirksam abgetötet werden.

Die Aufgabe wird durch ein Verfahren gelöst, bei dem einer wässrigen Kollagenlösung oder -suspension mindestens ein wasserlösliches, antiseptisch wirkendes Mittel, mindestens ein Tensid und mindestens ein Polysaccharid zugesetzt werden, wobei das antiseptisch wirkende Mittel aus der Gruppe ausgewählt wird, die aus Hexetidin, Nitroxolin, Taurolidin, Polyhexamethylenbiguanid, Salzen des Polyhexamethylenbiguanids, Octenidin, Salzen des Octenidins, Chlorhexidin, Salzen des Chlorhexidins, Benzalkoniumchlorid und Cetylpyridiniumchlorid besteht,
und wobei das/die Tensid(e) in einer Menge von 0,01 bis 1,5 Gew.-% und das/die Polysaccharid(e) in einer Menge von 10 bis 90 Gew.-%, bezogen auf die resultierende Kollagenzubereitung, beigemischt wird/werden.

Unter einer wässrigen Kollagenlösung bzw. wässriger Kollagensuspension ist eine Lösung oder Suspension von Kollagen in Wasser, insbesondere gereinigtem Wasser, oder in einer wässrigen Kochsalz- oder Ringerlösungen zu verstehen. Unter einer Kollagenzubereitung wird eine wässrige Kollagenlösung bzw. -suspension verstanden, die zusätzlich eine oder mehrere weitere Substanzen oder Verbindungen enthält, beispielsweise pharmazeutische und/oder kosmetische Wirkstoffe, Antioxidantien, Vitamine, Mittel zum Verhindern des Schäumens, Farbstoffe, Pigmente mit färbender Wirkung, verdickungsmittel, Weichmacher, feuchthaltende Mittel, Tenside, Polysaccharide, andere dem Fachmann geläufige Hilfsstoffe, oder aber auch die erfindungsgemäß vorgesehenen antiseptischen Mittel.

Beispiele für Salze des Chlorhexidins sind Chlorhexidin-Dihydrochlorid, Chlorhexidin-Diacetat, Chlorhexidin-D-Digluconat; Beispiele für Salze des Octenidins sind Octenidin-Dihydrochlorid und Octenidin-Disaccharin. Unter den Salzen des Polyhexamethylenbiguanids wird das Hydrochloridsalz des Polyhexamethylenbiguanids besonders bevorzugt.

Polyhexamethylenbiguanid-Salze umfassen wasserlösliche Oligomere mit einem breiten Wirkspektrum gegen Bakterien und Pilze. Vorzugsweise wird PHMB mit einem mittleren Molekulargewicht von 2300 bis 3100, besonders bevorzugt von 2300 bis unter 2900, verwendet.

Bei dem erfindungsgemäßen Verfahren werden vorzugsweise 100 Teile einer wässrigen Kollagenlösung oder -zubereitung mit einem Kollagengehalt von 0,5 bis 3 Gew.-% mit 0,05 bis 1 Teil(en) einer 20 %-igen (w/w) wässrigen Lösung des antimikrobiellen Wirkstoffs gemischt. Der pH-Wert der Kollagenlösung/-zubereitung liegt vorzugsweise zwischen 5 und 7, vorzugsweise zwischen 5 und 6,5. Der pH-Wert der Kollagenlösung/-zubereitung kann vor Zugabe der antiseptischen Lösung eingestellt werden. Nach Zugabe des Antiseptikums kann die Kollagenzubereitung entweder gelagert oder sofort zu den gewünschten Kollagenprodukten weiter verarbeitet werden.

Das erfindungsgemäße Verfahren erlaubt es somit, den Gehalt an antimikrobiellem Wirkstoff über einen breiten Bereich zu variieren und an die an ein aus der Kollagen enthaltenden Zubereitung herzustellendes Produkt zu stellenden Anforderungen anzupassen. Insofern kann der Kollagenlösung, -suspension oder -zubereitung das antiseptisch wirkende Mittel in einer Menge zugesetzt werden, die zu einem Gehalt an antimikrobiellem Wirkstoff in der resultierenden Kollagenzubereitung von 0,1 bis 40 Gew.-%, besonders bevorzugt von 0,5 bis 4 Gew.-%., bezogen auf die Trockenmasse der Kollagenzubereitung, führt.

Das erfindungsgemäße Verfahren bietet die Vorteile, dass
- die Art und/oder Herkunft des Kollagens keine Einschränkung darstellt,
- die Sterilität von Kollagenzubreitungen vor ihrer Weiterverarbeitung sichergestellt ist,
- Kollagenzubereitungen für einen langen Zeitraum vor ihrer Verwendung konserviert werden können,
- die Kompatibilität von Kollagen mit anderen Inhaltsstoffen in der Zubereitung oder den herzustellenden Produkten nicht beeinträchtigt wird,
- die Farbe und der Geruch der herzustellenden Produkte nicht beeinträchtigt wird,
- die Viskosität der Kollagen-Lösung leicht erhöht wird, was bei der weiteren Verarbeitung der Kollagen-Lösung vorteilhaft sein kann,
- die Mengen antimikrobiellen Wirkstoffs relativ gering sind und die Kosten für die Herstellung von KollagenProdukten nicht wesentlich erhöhen.

Bei dem erfindungsgemäßen Verfahren wird der Kollagenlösung, -suspension oder -zubereitung zusätzlich zu dem Antiseptikum ein Tensid oder Tensidgemisch beigemischt, wobei das Tensid vorzugsweise in amphoterer oder nicht-ioniogener Form in der Kollagenzubereitung vorliegt, um die Wirkung des Antiseptikums, insbesondere des PHMB nicht zu beeinträchtigen.

Tenside, die die antimikrobiellen Eigenschaften von PHMB nicht beeinträchtigen, werden in WO 03/004013 offenbart. Bei diesen Tensiden handelt es sich um Glycin-, Sulfosuccinat- und Amid-Derivate von Fettsäuren, die jeweils allein oder in beliebiger Kombination miteinander verwendet werden können.

Die Fettsäure der Glycin-, Sulfosuccinat- und Amid-Derivate besitzt vorzugsweise eine Kettenlänge von 10 bis 18 Kohlenstoffatomen und ist vorzugsweise unverzweigt. Sowohl gesättigte als auch ungesättigte Fettsäuren sind geeignet. Besonders bevorzugte Fettsäuren sind Undecylen-, Undecyl-, Laurin-, Stearin-, Ricinolsäure oder Kokosfettsäure.

Bei dem Glycin-Derivat handelt es sich vorzugsweise um ein Betain-, besonders bevorzugt um ein Amidoalkylbetain-Derivat einer Fettsäure. Bei dem Alkylrest handelt es sich vorzugsweise um eine Ethyl- oder Propyl-Gruppe. Beispiele für besonders geeignete Glycin-Derivate sind Cocamidopropylbetain, Laurdimethylaminoalkylbetain, Ricinolamidopropylbetain und Undecylenamidopropylbetain.

Die Antiseptikum enthaltende Kollagenzubereitung kann zusätzlich oder an Stelle des Glycin-Derivats ein Fettsäureamid und/oder ein Fettsäuresulfosuccinat und/oder ein Fettsäureamid enthalten. Obwohl es sich bei Sulfosuccinaten ihrer Struktur nach um anionische Verbindungen handelt, können sie bei entsprechendem pH-Wert der Lösung auch in nicht-ionischer Form vorliegen und werden in dieser Form zweckmäßigerweise auch verwendet.

Alternativ zu den vorgenannten Tensiden kann der Kollagenlösung oder -zubereitung auch Distearyldimethylammoniumchlorid zugesetzt werden, da dieses kationische Tensid gemäß WO 2004/032945 die antimikrobielle Wirkung von PHMB-HCl nicht beeinträchtigt, sondern sogar zu einem synergistischen Effekt führt.

Das Tensid oder Tensidgemisch ist mit einen Anteil von 0,01 bis 1,5 Gew.-%, vorzugsweise von 0,03 bis 1 Gew.-%, und besonders bevorzugt von 0,05 bis 0,4 Gew.-%, in der Kollagenzubereitung enthalten.

Der Kollagenlösung/-suspension bzw. -zubereitung wird vor oder nach Zugabe des Antiseptikums und des Tensids mindestens ein Polysaccharid, vorzugsweise ein anionisches Polysaccharid zugesetzt. Das anionische Polysaccharid kann aus der Gruppe ausgewählt sein, die aus Alginaten, Hyaluronsäure und ihren Salzen (Hyaluronaten), Pektinen, Carrageenanen, Xanthanen, sulfatierten Dextranen, Cellulosederivaten, oxidierter Cellulose wie oxidierter regenerierter Cellulose, und deren Mischungen besteht.

Ferner können auch Chondroitin, Chondroitin-4-sulfat, Chondroitin-6-sulfat, Heparin, Heparansulfat, Keratansulfat, Dermatansulfat, Stärkederivate und andere Polyglycoside verwendet werden.

Bevorzugt werden anionische Polysaccharide verwendet, die bei einem pH-Wert von 7 im Wesentlichen unlöslich in Wasser sind. Vorzugsweise hat das anionische Polysaccharid ein Molekulargewicht, das über 20.000 liegt, besonders bevorzugt über 50.000.

Das Polysaccharid bzw. die Polysaccharide wird/werden der wässrigen Kollagenlösung oder -suspension in einer Menge von 10 bis 90 Gew.-%, besonders bevorzugt von 25 bis 75 Gew.-%, bezogen auf das Trockengewicht der Zubereitung, zugesetzt.

Für die Durchführung des erfindungsgemäßen Verfahrens ist es unwesentlich, in welcher Reihenfolge die weiteren Substanzen oder Verbindungen zu der Kollagenlösung/-suspension zugegeben werden. So kann das Antiseptikum als erste Substanz zur Kollagenlösung/-suspension oder aber auch erst unmittelbar vor der Weiterverarbeitung einer bereits vorgefertigten Kollagenzubereitung, die beispielsweise bereits Polysaccharide und/oder Tenside enthält, zu dieser zugegeben werden.

Gegenstand der vorliegenden Erfindung sind ferner Kollagen enthaltende Zubereitungen, die mit den beschriebenen verfahren erhalten werden können.

Daher betrifft die Erfindung wässrige, Kollagen enthaltende Zubereitungen, die sich gegenüber den aus dem Stand der Technik bekannten Kollagen Zubereitungen und Produkten dadurch unterscheiden, dass sie autosteril und antiseptisch sind.

Autosteril bedeutet in diesem Zusammenhang, dass sich nach der Sterilisation hinzutretende Mikroorganismen (Bakterien, Hefen, Schimmelpilze und dergleichen) nicht vermehren können, sondern wirksam abgetötet werden.

Die Kollagen enthaltenden Zubereitungen gemäß der Erfindung enthalten mindestens ein wasserlösliches, antiseptisch wirkendes Mittel, mindestens ein Tensid und mindestens ein Polysaccharid, wobei das antiseptisch wirkende Mittel aus der Gruppe ausgewählt wird, die aus Hexetidin, Nitroxolin, Taurolidin, Polyhexamethylenbiguanid, Salzen des Polyhexamethylenbiguanids, Octenidin, Salzen des Octenidins, Chlorhexidin, Salzen des Chlorhexidins, Benzalkoniumchlorid und Cetylpyridiniumchlorid besteht,
und wobei das/die Tensid(e) in einer Menge von 0,01 bis 1,5 Gew.-% und das/die Polysaccharid(e) in einer Menge von 10 bis 90 Gew.-% in der Kollagenzubereitung enthalten ist/ sind.

Beispiele für geeignete Salze sind Polyhexamethylenbiguanid-Hydrochlorid, Chlorhexidin-Dihydrochlorid, Chlorhexidin-Diacetat, Chlorhexidin-D-Digluconat, Octenidin-Dihydrochlorid und Octenidin-Disaccharin. Alternativ können erfindungsgemäße Kollagenzubereitungen auch Taurolidin enthalten.

Vorzugsweise enthalten die Kollagenzubereitungen den antimikrobiellen Wirkstoff des antiseptisch wirkenden Mittels in einer Menge von 0,1 bis 40 Gew.-%, vorzugsweise von 0,5 bis 4 Gew.-%, bezogen auf das Trockengewicht der Kollagenzubereitung.

Die Kollagen enthaltende Zubereitung enthält ein Tensid oder ein Tensidgemisch, vorzugsweise ein Tensid oder Tensidgemisch, das in der Kollagen enthaltenden Zubereitung in amphoterer oder nicht-ionogener Form vorliegt. Bei diesen Tensiden handelt es sich um Glycin-, Sulfosuccinat- und Amid-Derivate von vorzugsweise eine Kettenlänge von 10 bis 18 Kohlenstoffatome aufweisenden, insbesondere unverzweigten Fettsäuren.

Alternativ kann die Kollagen enthaltende Zubereitung auch Distearyldimethylammoniumchlorid enthalten.

Kollagen enthaltende Zubereitungen gemäß der vorliegenden Erfindung enthalten das Tensid oder Tensidgemisch in einer Menge von 0,01 bis 1,5 Gew.-%, vorzugsweise in einer Menge von 0,03 bis 1 Gew.-% und besonders bevorzugt in einer Menge von 0,05 bis 0,4 Gew.-%.

Ferner enthält die Kollagen enthaltende Zubereitung mindestens ein Polysaccharid, vorzugsweise ein anionisches Polysaccharid. Der Anteil an Polysaccharid in der Kollagen enthaltenden Zubereitung beträgt 10 bis 90 Gew.-%, vorzugsweise 25 bis 75 Gew.-%.

Geeignete Polysaccharide können aus der Gruppe ausgewählt sein, die aus Alginaten, Hyaluronsäure und ihren Salzen (Hyaluronaten), Pektinen, Carrageenanen, Xanthanen, sulfatierten Dextranen, Cellulosederivaten, oxidierter Cellulose wie oxidierter regenerierter Cellulose, Chondroitin, Chondroitin-4-sulfat, Chondroitin-6-sulfat, Heparin, Heparansulfat, Keratansulfat, Dermatansulfat, Stärkederivate und deren Mischungen besteht.

Die erfindungsgemäßen Kollagenzubereitungen können entweder unmittelbar nach ihrer Herstellung mit den an sich bekannten Verfahren zu Kollagenprodukten weiter verarbeitet werden, oder sie können erst zwischengelagert werden, da die erfindungsgemäßen Kollagenzubereitungen nicht nur sterilisiert wurden, sondern darüber hinaus auch autosteril sind.

Die erfindungsgemäßen Kollagen enthaltenden Zubereitungen können vorteilhafterweise zur Herstellung von autosterilen, antiseptischen Kollagenprodukten verwendet werden. Bevorzugte Kollagenprodukte sind beispielsweise Pulver, Mikrosphären, Flocken, Fasern, Gewebe, Matten, Folien, Membrane, Schwämme, Salben und Gele, insbesondere für die Anwendung im kosmetischen und/oder medizinischen Bereich. Besonders bevorzugte Kollagenprodukte sind Wundauflagen.

Beispielsweise lassen sich Kollagenschwämme herstellen, indem eine erfindungsgemäße Kollagen enthaltende Zubereitung aufgeschäumt oder die in ihr enthaltene Luft unter Vakuum entfernt, die aufgeschäumte oder entgaste Kollagenzubereitung in eine Form gefüllt, tiefgefroren, und die tiefgefrorene Kollagenzubereitung anschließend gefriergetrocknet wird.

### Beispiel 1

Ein Liter einer 1 %-igen (w/w) wässrigen Kollagen-Lösung (pH 6,5) wurde mit 20 ml einer 20 %-igen wässrigen Poly-(hexamethylenbiguanid)hydrochlorid-Lösung (Cosmocil® QC) kräftig bei Raumtemperatur gemischt. Nach dem Vermischen stieg die viskosität der Zubereitung aufgrund der physikalischen Interaktion zwischen Kollagen und PHMB leicht an. Die erhaltene Mischung wurde in Formen aus Polystyrol, Polyethylen oder Polypropylen gegossen, bei -40°C tiefgefroren und unter Vakuum getrocknet (lyophilisiert).

Mit den resultierenden Kollagen-Schwämmen wurden Standardtests (Agar-Diffusionstest) durchgeführt, um ihre antimikrobielle Wirkung zu untersuchen. Die Agar-Diffusionstests wurden unter Verwendung von *Staphylococcus* aureus, *Pseudomonas aeruginosa* und *Candida albicans* durchgeführt und zeigten eine antimikrobielle Wirkung der Kollagenschwämme über mehr als 120 Stunden an.

### Beispiel 2

800 ml der Kollagen/PHMB-Mischung aus Beispiel 1 wurden bei Raumtemperatur kräftig mit 200 ml einer wässrigen, 1 %-igen (w/w) Natrium-Alginat-Lösung vermischt. Die so erhaltene Kollagen-Zubereitung wurde in Formen aus Polystyrol, Polyethylen oder Polypropylen gegossen, bei -40°C tiefgefroren und unter Vakuum getrocknet (lyophilisiert).

Mit den resultierenden Kollagen-Schwämmen wurden Standardtests (Agar-Diffusionstest) durchgeführt, um ihre antimikrobielle Wirkung zu untersuchen. Die Agar-Diffusionstests wurden unter Verwendung von *Staphylococcus* aureus, *Pseudomonas aeruginosa* und *Candida albicans* durchgeführt und zeigten eine antimikrobielle Wirkung der Kollagenschwämme über mehr als 120 Stunden an.

## Patentansprüche

1. Verfahren zur Herstellung einer autosterilen, antiseptischen Kollagenzubereitung, **dadurch gekennzeichnet, dass** einer wässrigen Kollagenlösung oder -suspension mindestens ein wasserlösliches, antiseptisch wirkendes Mittel, mindestens ein Tensid und mindestens ein Polysaccharid zugesetzt werden,
wobei das antiseptisch wirkende Mittel aus der Gruppe ausgewählt wird, die aus Hexetidin, Nitroxolin, Taurolidin, Polyhexamethylenbiguanid, Salzen des Polyhexamethylenbiguanids, Octenidin, Salzen des Octenidins, Chlorhexidin, Salzen des Chlorhexidins, Benzalkoniumchlorid und Cetylpyridiniumchlorid besteht,
und wobei das/die Tensid(e) in einer Menge von 0,01 bis 1,5 Gew.-% und das/die Polysaccharid(e) in einer Menge von 10 bis 90 Gew.-%, bezogen auf die resultierende Kollagenzubereitung, beigemischt wird/werden.

2. Verfahren nach Anspruch 1, **dadurch gekennzeichnet, dass** das antiseptisch wirkende Mittel aus der Gruppe ausgewählt wird, die aus Polyhexamethylenbiguanid-Hydrochlorid, Chlorhexidin-Dihydrochlorid, Chlorhexidin-Diacetat, Chlorhexidin-D-Digluconat, Octenidin-Dihydrochlorid und Octenidin-Disaccharin besteht.

3. Verfahren nach einem der vorangehenden Ansprüche, **dadurch gekennzeichnet, dass** das antiseptisch wirkende Mittel in einer Menge zugesetzt wird, die zu einem Gehalt an antimikrobiellem Wirkstoff in der resultierenden Kollagen enthaltenden Zubereitung von 0,1 bis 40 Gew.-%, vorzugsweise von 0,5 bis 4 Gew.-%, bezogen auf das Trockengewicht der resultierenden Kollagenzubereitung, führt.

4. Verfahren nach einem der vorangehenden Ansprüche, **dadurch gekennzeichnet, dass** der Kollagenlösung, -suspension oder -zubereitung ein Tensid beigemischt wird, das in der resultierenden Kollagenzubereitung in amphoterer oder nicht-ionogener Form vorliegt.

5. Verfahren nach Anspruch 4, **dadurch gekennzeichnet, dass** das Tensid aus der Gruppe ausgewählt wird, die Glycin-Derivate von Fettsäuren, Sulfosuccinat-Derivate von Fettsäuren, Amid-Derivate von Fettsäuren und Distearyldimethylammoniumchlorid umfasst, wobei die Fettsäuren vorzugsweise eine Kettenlänge von 10 bis 18 Kohlenstoffatome haben und unverzweigt sind.

6. Verfahren nach Anspruch 4 oder 5, **dadurch gekennzeichnet, dass** das Tensid oder Tensidgemisch in einer Menge von 0,03 bis 1 Gew.-%, vorzugsweise von 0,05 bis 0,4 Gew.-%, bezogen auf die resultierende Kollagenzubereitung, beigemischt wird.

7. Verfahren nach einem der vorangehenden Ansprüche, **dadurch gekennzeichnet, dass** als Polysaccharid ein anionisches Polysaccharid zugesetzt wird.

8. Verfahren nach einem der Ansprüche 1 bis 7, **dadurch gekennzeichnet, dass** das Polysaccharid aus der Gruppe ausgewählt wird, die aus Alginaten, Hyaluronsäure und ihren Salzen (Hyaluronaten), Pektinen, Carrageenanen, Xanthanen, sulfatierten Dextranen, Cellulosederivaten, oxidierter Cellulose wie oxidierter regenerierter Cellulose, Chondroitin, Chondroitin-4-sulfat, Chondroitin-6-sulfat, Heparin, Heparansulfat, Keratansulfat, Dermatansulfat, Stärkederivaten und deren Mischungen besteht.

9. Verfahren nach Anspruch 7 oder 8, **dadurch gekennzeichnet, dass** das Polysaccharid in einer Menge von 25 bis 75 Gew.-%, bezogen auf die resultierende Kollagenzubereitung, zugesetzt wird.

10. Wässrige, Kollagen enthaltende Zubereitung, **dadurch gekennzeichnet, dass** sie autosteril und antiseptisch ist und mindestens ein wasserlösliches, antiseptisch wirkendes Mittel, mindestens ein Tensid und mindestens ein Polysaccharid enthält, wobei das antiseptisch wirkende Mittel aus der Gruppe ausgewählt wird, die aus Hexetidin, Nitroxolin, Taurolidin, Polyhexamethylenbiguanid, Salzen des Polyhexamethylenbiguanids, Octenidin, Salzen des Octenidins, Chlorhexidin, Salzen des Chlorhexidins, Benzalkoniumchlorid und Cetylpyridiniumchlorid besteht,
und wobei das/die Tensid(e) in einer Menge von 0,01 bis 1,5 Gew.-% und das/die Polysaccharid(e) in einer Menge von 10 bis 90 Gew.-% in der Kollagenzubereitung enthalten ist/ sind.

11. Kollagen enthaltende Zubereitung nach Anspruch 10, **dadurch gekennzeichnet, dass** das antiseptische Mittel aus der Gruppe ausgewählt ist, die aus Polyhexamethylenbiguanid-Hydrochlorid, Chlorhexidin-Dihydrochlorid, Chlorhexidin-Diacetat, Chlorhexidin-D-Digluconat, Octenidin-Dihydrochlorid und Octenidin-Disaccharin besteht.

12. Kollagen enthaltende Zubereitung nach Anspruch 11, **dadurch gekennzeichnet, dass** sie den antimikrobiellen Wirkstoff des antiseptisch wirkenden Mittels in einer Menge von 0,1 bis 40 Gew.-%, vorzugsweise von 0,5 bis 4 Gew.-%, bezogen auf das Trockengewicht der Kollagenzubereitung, enthält.

13. Kollagen enthaltende Zubereitung nach einem der Ansprüche 10 bis 12, **dadurch gekennzeichnet, dass** die Zubereitung mindestens ein Tensid enthält, das in der Zubereitung in amphoterer oder nicht-ionogener Form vorliegt.

14. Kollagen enthaltende Zubereitung nach einem der Ansprüche 1 bis 13, **dadurch gekennzeichnet, dass** das Tensid aus der Gruppe ausgewählt ist, die Glycin-Derivate von Fettsäuren, Sulfosuccinate von Fettsäuren und Amide von Fettsäuren, und Distearyldimethylammoniumchlorid umfasst, wobei die Fettsäuren vorzugsweise eine Kettenlänge von 10 bis 18 Kohlenstoffatome haben und unverzweigt sind.

15. Kollagen enthaltende Zubereitung nach Anspruch 13 oder 14, **dadurch gekennzeichnet, dass** das Tensid oder Tensidgemisch in einer Menge von 0,03 bis 1 Gew.-%, vorzugsweise von 0,05 bis 0,4 Gew.-%, in der Kollagenzubereitung enthalten ist.

16. Kollagen enthaltende Zubereitung nach einem der Ansprüche 10 bis 15, **dadurch gekennzeichnet, dass** sie mindestens ein anionisches Polysaccharid, enthält.

17. Kollagen enthaltende Zubereitung nach Anspruch 16, **dadurch gekennzeichnet, dass** das Polysaccharid aus der Gruppe ausgewählt ist, die aus Alginaten, Hyaluronsäure und ihren Salzen (Hyaluronaten), Pektinen, Carrageenanen, Xanthanen, sulfatierten Dextranen, Cellulosederivaten, oxidierter Cellulose wie oxidierter regenerierter Cellulose, Chondroitin, Chondroitin-4-sulfat, Chondroitin-6-sulfat, Heparin, Heparansulfat, Keratansulfat, Dermatansulfat, Stärkederivate und deren Mischungen besteht.

18. Kollagen enthaltende Zubereitung nach Anspruch 16 oder 17, **dadurch gekennzeichnet, dass** die Menge an Polysaccharid in der Kollagen enthaltenden Zubereitung 25 bis 75 Gew.-% beträgt, bezogen auf das Trockengewicht der Zubereitung.

19. Verwendung einer Kollagen enthaltenden Zubereitung nach einem der Ansprüche 10 bis 18 zur Herstellung autosteriler, antiseptischer Kollagenprodukte.

20. Verwendung nach Anspruch 19, **dadurch gekennzeichnet, dass** es sich bei den Kollagenprodukten um Pulver, Mikrosphären, Flocken, Fasern, Gewebe, Matten, Folien, Membrane, Schwämme, Wundauflagen, Salben oder Gele, insbesondere für kosmetische oder medizinische Anwendungen, handelt.

21. Verfahren zur Herstellung von Kollagenschwämmen, **dadurch gekennzeichnet, dass** eine Kollagen enthaltende Zubereitung nach einem der Ansprüche 10 bis 18 (i) aufgeschäumt oder die in der Kollagen enthaltenden Zubereitung enthaltene Luft unter Vakuum entfernt, (ii) die aufgeschäumte oder entgaste Kollagenzubereitung tiefgefroren; und (iii) die tiefgefrorene Kollagenzubereitung gefriergetrocknet wird.

## Claims

1. Method for producing a self-sterilised, antiseptic collagen preparation, **characterised in that** at least one water-soluble, antiseptically active agent, at least one surface-active agent and at least one polysaccharide are added to an aqueous collagen solution or aqueous collagen suspension,
said antiseptically active agent being selected from the group consisting of hexetidine, nitroxoline, taurolidine, polyhexamethylene biguanide, salts of polyhexamethylene biguanide, octenidine, salts of octenidine, chlorhexidine, salts of chlorhexidine, benzalkonium chloride and cetylpyridinium chloride,
and said surface-active agent(s) being added in an amount of 0.01 to 1.5 percent by weight, and said polysaccharide(s) being added in an amount of 10 to 90 percent by weight, relative to the resultant collagen preparation.

2. Method according to claim 1, **characterised in that** the antiseptically active agent is selected from the group consisting of polyhexamethylene biguanide hydrochloride, chlorhexidine dihydrochloride, chlorhexidine diacetate, chlorhexidine-D-digluconate, octenidine dihydrochloride and octenidine disaccharin.

3. Method according to any one of the preceding claims, **characterised in that** the antiseptically active agent is added in an amount that leads to a content of antimicrobial active agent in the resultant collagen-containing preparation of 0.1 to 40 percent by weight, preferably 0.5 to 4 percent by weight, relative to the dry weight of the resultant collagen preparation.

4. Method according to any one of the preceding claims, **characterised in that** a surface-active agent is added to the collagen solution, suspension or preparation, which surface-active agent is present in the resultant collagen preparation in amphoteric or non-ionogenic form.

5. Method according to claim 4, **characterised in that** the surface-active agent is selected from the group comprising glycine derivatives of fatty acids, sulfosuccinate derivatives of fatty acids, amide derivatives of fatty acids and distearyl dimethyl ammonium chloride, said fatty acids preferably having a chain length of 10 to 18 carbon atoms and preferably being unbranched.

6. Method according to claim 4 or 5, **characterised in that** the surface-active agent or the mixture of surface-active agents is added in an amount of 0.03 to 1 percent by weight, preferably from 0.05 to 0.4 percent by weight, relative to the resultant collagen preparation.

7. Method according to any one of the preceding claims, **characterised in that** an anionic polysaccharide is added as a said polysaccharide.

8. Method according to any one of claims 1 to 7, **characterised in that** the polysaccharide is selected from the group consisting of alginates, hyaluronic acid and its salts (hyaluronates), pectins, carragheenans, xanthans, sulfated dextranes, cellulose derivatives, oxidised cellulose such as oxidised regenerated cellulose, chondroitin, chondroitin-4-sulfate, chondroitin-6-sulfate, heparin, heparan sulfate, keratan sulfate, dermatan sulfate, starch derivatives, and mixtures thereof.

9. Method according to claim 7 or 8, **characterised in that** the polysaccharide is added in an amount of 25 to 75 percent by weight, relative to the resultant collagen preparation.

10. Aqueous, collagen-containing preparation, **characterised in that** it is self-sterilised and antiseptic and contains at least one water-soluble, antiseptically active agent, at least one surface-active agent and at least one polysaccharide, said antiseptically active agent being selected from the group consisting of hexetidine, nitroxoline, taurolidine, polyhexamethylene biguanide, salts of polyhexamethylene biguanide, octenidine, salts of octenidine, chlorhexidine, salts of chlorhexidine, benzalkonium chloride and cetylpyridinium chloride,
and said surface-active agent(s) being contained in the collagen preparation in an amount of 0.01 to 1.5 percent by weight, and said polysaccharide(s) being contained therein in an amount of 10 to 90 percent by weight.

11. Collagen-containing preparation according to claim 10, **characterised in that** the antiseptically active agent is selected from the group consisting of polyhexamethylene biguanide hydrochloride, chlorhexidine dihydrochloride, chlorhexidine diacetate, chlorhexidine-D-digluconate, octenidine dihydrochloride and octenidine disaccharin.

12. Collagen-containing preparation according to claim 11, **characterised in that** it contains the antimicrobial active agent of the antiseptically active agent in an amount of 0.1 to 40 percent by weight, preferably 0.5 to 4 percent by weight, relative to the dry weight of the collagen preparation.

13. Collagen-containing preparation according to any one of claims 10 - 12, **characterised in that** the preparation contains at least one surface-active agent which is present in the preparation in amphoteric or non-ionogenic form.

14. Collagen-containing preparation according to any one of claims 1 to 13, **characterised in that** the surface-active agent is selected from the group comprising glycine derivatives of fatty acids, sulfosuccinates of fatty acids, and amides of fatty acids, and distearyl dimethyl ammonium chloride, said fatty acids preferably having a chain length of 10 to 18 carbon atoms and preferably being unbranched.

15. Collagen-containing preparation according to claim 13 or 14, **characterised in that** the surface-active agent or the mixture of surface-active agents is contained in the collagen preparation in an amount of 0.03 to 1 percent by weight, preferably of 0.05 to 0.4 percent by weight.

16. Collagen-containing preparation according to any one of claims 10 to 15, **characterised in that** it contains at least one anionic polysaccharide.

17. Collagen-containing preparation according to claim 16, **characterised in that** the polysaccharide is selected from the group consisting of alginates, hyaluronic acid and its salts (hyaluronates), pectins, carragheenans, xanthans, sulfated dextranes, cellulose derivatives, oxidised cellulose such as oxidised regenerated cellulose, chondroitin, chondroitin-4-sulfate, chondroitin-6-sulfate, heparin, heparan sulfate, keratan sulfate, dermatan sulfate, starch derivatives, and mixtures thereof.

18. Collagen-containing preparation according to claim 16 or 17, **characterised in that** the amount of polysaccharide in the collagen-containing preparation is from 25 to 75 percent by weight, relative to the dry weight of the preparation.

19. Use of a collagen-containing preparation according to any one of claims 10 to 18 for producing self-sterilised, antiseptic collagen products.

20. Use according to claim 19, **characterised in that** the collagen products are powders, microspheres, flakes, fibres, wovens, mats, films, membranes, sponges, wound dressings, ointments or gels, particularly for cosmetic or medical applications.

21. Method for the production of collagen sponges, **characterised in that** a collagen-containing preparation according to any one of claims 10 to 18 (i) is foamed or the air contained in the collagen-containing preparation is removed under vacuum, (ii) the foamed or degassed collagen preparation is deep-frozen and (iii) the deep-frozen collagen preparation is freeze-dried.

## Revendications

1. Procédé pour la production d'une préparation de collagène autostérile, antiseptique, **caractérisé en ce qu'**une solution ou une suspension aqueuse de collagène est additionnée d'au moins un agent soluble dans l'eau, à effet antiseptique, d'au moins un agent tensioactif et d'au moins un polysaccharide, l'agent à effet antiseptique étant choisi dans le groupe constitué par l'hexétidine, la nitroxoline, la taurolidine, le polyhexaméthylènebiguanide, les sels du polyhexaméthylènebiguanide, l'octénidine, les sels de l'octénidine, la chlorhexidine, les sels de la chlorhexidine, le chlorure de benzalconium et le chlorure de cétylpyridinium,
le/les agent(s) tensioactif(s) étant incorporé(s) en une quantité de 0,01 à 1,5% en poids et le/les polysaccharide(s) étant incorporé(s) en une quantité de 10 à 90% en poids, par rapport à la préparation résultante de collagène.

2. Procédé selon la revendication 1, **caractérisé en ce que** l'agent à effet antiseptique est choisi dans le groupe constitué par le chlorhydrate de polyhexaméthylènebiguanide, le dichlorhydrate de chlorhexidine, le diacétate de chlorhexidine, le D-gluconate de chlorhexidine, le dichlorhydrate d'octénidine et l'octénidine-disaccharine.

3. Procédé selon l'une quelconque des revendications précédentes, **caractérisé en ce que** l'agent à effet antiseptique est ajouté en une quantité qui conduit à une teneur en substance active antimicrobienne dans la préparation résultante contenant le collagène de 0,1 à 40% en poids, de préférence de 0,5 à 4% en poids, par rapport au poids sec de la préparation résultante de collagène.

4. Procédé selon l'une quelconque des revendications précédentes, **caractérisé en ce que** la solution, la suspension ou la préparation de collagène est additionnée d'un agent tensioactif qui se trouve sous forme amphotère ou non ionogène dans la préparation résultante de collagène.

5. Procédé selon la revendication 4, **caractérisé en ce que** l'agent tensioactif est choisi dans le groupe comprenant les dérivés de glycine d'acides gras, les dérivés de sulfosuccinate d'acides gras, les dérivés de type amide d'acides gras et le chlorure de distéaryldiméthylammonium, les acides gras présentant de préférence une longueur de chaîne de 10 à 18 atomes de carbone et étant non ramifiés.

6. Procédé selon la revendication 4 ou 5, **caractérisé en ce que** l'agent tensioactif ou le mélange d'agents tensioactifs est incorporé en une quantité de 0,03 à 1% en poids, de préférence de 0,05 à 0,4% en poids, par rapport à la préparation résultante de collagène.

7. Procédé selon l'une quelconque des revendications précédentes, **caractérisé en ce qu'**on ajoute, comme polysaccharide, un polysaccharide anionique.

8. Procédé selon l'une quelconque des revendications 1 à 7, **caractérisé en ce que** le polysaccharide est choisi dans le groupe constitué par les alginates, l'acide hyaluronique et ses sels (hyaluronates), les pectines, les carraghénanes, les xanthanes, les dextranes sulfatés, les dérivés de cellulose, la cellulose oxydée telle que la cellulose oxydée régénérée, la chondroïtine, le sulfate de chondroïtine-4, le sulfate de chondroïtine-6, l'héparine, le sulfate d'héparane, le sulfate de kératane, le sulfate de dermatane, les dérivés d'amidon et leurs mélanges.

9. Procédé selon la revendication 7 ou 8, **caractérisé en ce que** le polysaccharide est ajouté en une quantité de 25 à 75% en poids, par rapport à la préparation résultante de collagène.

10. Préparation aqueuse, contenant du collagène, **caractérisée en ce qu'**elle est autostérile et antiseptique et contient au moins un agent à effet antiseptique, soluble dans l'eau, au moins un agent tensioactif et au moins un polysaccharide, l'agent à effet antiseptique étant choisi dans le groupe constitué par l'hexétidine, la nitroxoline, la taurolidine, le polyhexaméthylènebiguanide, les sels du polyhexaméthylènebiguanide, l'octénidine, les sels de l'octénidine, la chlorhexidine, les sels de la chlorhexidine, le chlorure de benzalconium et le chlorure de cétylpyridinium,
et le/les agent(s) tensioactif(s) étant contenu(s) en une quantité de 0,01 à 1,5% en poids et le/les polysaccharide(s) étant contenu(s) en une quantité de 10 à 90% en poids, par rapport à la préparation résultante de collagène.

11. Préparation contenant du collagène selon la revendication 10, **caractérisée en ce que** l'agent antiseptique est choisi dans le groupe constitué par le chlorhydrate de polyhexaméthylènebiguanide, le dichlorhydrate de chlorhexidine, le diacétate de chlorhexidine, le D-gluconate de chlorhexidine, le dichlorhydrate d'octénidine et l'octénidine-disaccharine.

12. Préparation contenant du collagène selon la revendication 11, **caractérisée en ce qu'**elle contient la substance active antimicrobienne de l'agent à effet antimicrobien en une quantité de 0,1 à 40% en poids, de préférence de 0,5 à 4% en poids, par rapport au poids sec de la préparation de collagène.

13. Préparation contenant du collagène selon l'une quelconque des revendications 10 à 12, **caractérisée en ce que** la préparation contient au moins un agent tensioactif, qui se trouve dans la préparation sous forme amphotère ou non ionogène.

14. Préparation contenant du collagène selon l'une quelconque des revendications 1 à 13, **caractérisée en ce que** l'agent tensioactif est choisi dans le groupe comprenant les dérivés de glycine d'acides gras, les sulfosuccinates d'acides gras et les amides d'acides gras et le chlorure de distéaryldiméthylammonium, les acides gras présentant de préférence une longueur de chaîne de 10 à 18 atomes de carbone et étant non ramifiés.

15. Préparation contenant du collagène selon la revendication 13 ou 14, **caractérisée en ce que** l'agent tensioactif ou le mélange d'agents tensioactifs est contenu en une quantité de 0,03 à 1% en poids, de préférence de 0,05 à 0,4% en poids dans la préparation de collagène.

16. Préparation contenant du collagène selon l'une quelconque des revendications 10 à 15, **caractérisée en ce qu'**elle contient au moins un polysaccharide anionique.

17. Préparation contenant du collagène selon la revendication 16, **caractérisée en ce que** le polysaccharide est choisi dans le groupe constitué par les alginates, l'acide hyaluronique et ses sels (hyaluronates), les pectines, les carraghénanes, les xanthanes, les dextranes sulfatés, les dérivés de cellulose, la cellulose oxydée telle que la cellulose oxydée régénérée, la chondroïtine, le sulfate de chondroïtine-4, le sulfate de chondroïtine-6, l'héparine, le sulfate d'héparane, le sulfate de kératane, le sulfate de dermatane, les dérivés d'amidon et leurs mélanges.

18. Préparation contenant du collagène selon la revendication 16 ou 17, **caractérisée en ce que** la quantité de polysaccharide dans la préparation contenant du collagène est de 25 à 75% en poids, par rapport au poids sec de la préparation.

19. Utilisation d'une préparation contenant du collagène selon l'une quelconque des revendications 10 à 18 pour la production de produits de collagène autostériles, antiseptiques.

20. Utilisation selon la revendication 19, **caractérisée en ce qu'**il s'agit, pour les produits du collagène, de poudres, de microsphères, de flocons, de fibres, de tissus, de toiles, de feuilles, de membranes, d'éponges, de pansements, de pommades ou de gels, en particulier destinés à des utilisations cosmétiques ou médicales.

21. Procédé pour la préparation d'éponges de collagène, **caractérisé en ce qu'**une préparation contenant du collagène selon l'une quelconque des revendications 10 à 18 (i) est moussée ou l'air contenu dans la préparation contenant du collagène est éliminé sous vide, (ii) la préparation de collagène moussée ou dégazée est congelée; et (iii) la préparation de collagène congelée est lyophilisée.
